# EUROPÄISCHE PATENTSCHRIFT

(11) **EP 4 490 420 B1**
(45) Veröffentlichungstag und Bekanntmachung des Hinweises auf die Patenterteilung: **01.07.2026**
(21) Anmeldenummer: 23705516.5
(22) Anmeldetag: 14.02.2023
(51) Int. Cl.: F16K 31/06, F16K 47/00, F16K 3/24, F16K 11/07, F16H 61/02

(54) **VENTILANORDNUNG FÜR EIN GETRIEBE EINES KRAFTFAHRZEUGS**
VALVE ASSEMBLY FOR A TRANSMISSION OF A MOTOR VEHICLE
ENSEMBLE SOUPAPE POUR UNE TRANSMISSION D'UN VÉHICULE À MOTEUR

(30) Priorität: 10.03.2022 DE 102022202369
(43) Veröffentlichungstag der Anmeldung: 15.01.2025
(73) Patentinhaber: ZF Friedrichshafen AG, 88046 Friedrichshafen (DE)
(72) Erfinder: POPP, Christian, 88079 Kressbronn (DE); SCHMIDT, Thilo, 88074 Meckenbeuren (DE); HAUGG, Armin, 88046 Friedrichshafen (DE)
(74) Vertreter: ZF Friedrichshafen AG
(86) Internationale Anmeldenummer: PCT/EP2023/053607
(87) Internationale Veröffentlichungsnummer: WO 2023/169777

(56) Entgegenhaltungen:
- EP-B1- 1 856 587
- DE-A1- 1 925 182
- DE-A1- 102014 219 726
- DE-A1- 19 646 426
- GB-A- 2 334 308
- US-A1- 2015 129 072

## Beschreibung

Die Erfindung betrifft eine Ventilanordnung für ein Getriebe eines Kraftfahrzeugs. Weitere Ansprüche sind auf ein Getriebe mit der Ventilanordnung sowie auf ein Kraftfahrzeug mit dem Getriebe gerichtet.

Bei hydraulischen Steuerungen kommt es immer wieder zu Schwingungen im System. Insbesondere sind hier Ansteuerungen von Kupplungen in Automatikgetrieben (z.B.in Doppelkupplungsgetrieben oder in Hybridgetrieben) von Kraftfahrzeugen betroffen. Einerseits soll die Hydraulik sehr spontan reagieren und schnell sein und auf der anderen Seite möglichst keine Druckspitzen aufweisen und auch schwingstabil sein. Vor allem bei sogenannten Direktsteuerventilen, bei denen ein Stößel eines Proportionalmagneten direkt auf ein Kupplungsventil wirkt, sind solche Probleme hinlänglich bekannt. Diese Schwingungen können zu nicht reproduzierbaren, willkürlichen Mittelwertsverschiebungen in der Druckansteuerung führen. Die EP 1 856 587 B1 schlägt zur Reduzierung von Schwingungen ein Proportional-Druckregelventil vor, welches aus einem Magnetteil und einem Hydraulikteil besteht. Der Magnetteil besteht zumindest aus einer Magnetspule, einem Magnetanker und einem Magnetkern, wobei der Magnetanker fest mit einer Ankerstange verbunden ist. Der Hydraulikteil ist wiederum über eine Stößelstange mit der Ankerstange verbunden, wobei die Ankerstange über ein elastisches Element mit der Stößelstange verbunden ist.

Bekannte Ventilanordnungen sind beispielsweise in den Dokumenten DE 19 25 182 A1, DE 196 46 426 A1 oder GB 2 334 308 A gezeigt. Schließlich zeigt das Dokument DE 10 2014 219726 A1 eine gattungsgemäße Ventilanordnung.

Eine Aufgabe der vorliegenden Erfindung kann darin gesehen werden, Schwingungen in einem hydraulischen System weiter besonders effektiv zu dämpfen und somit eine korrekte Druckansteuerung zu ermöglichen. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß der vorliegenden Erfindung wird vorgeschlagen, zwischen einem Stößel eines Proportionalmagneten und einen Ventilschieber eines Kupplungsventils ein Koppelelement einzubringen. Bei dem Koppelelement kann es sich beispielsweise um eine Feder oder allgemein um ein elastisches Bauteil handeln. Mittels des Koppelelements wird das System derart verstimmt, dass eine Neigung zu Schwingungen in diesem Bereich eliminiert oder zumindest reduziert wird, wodurch das System ausreichend stabilisiert wird.

In diesem Sinne wird gemäß einem ersten Aspekt der Erfindung nach Anspruch 1 eine Ventilanordnung für ein Getriebe eines Kraftfahrzeugs bereitgestellt. Die Ventilanordnung umfasst einen elektromagnetischen Aktuator mit einem Stößel, ein Hydraulikventil mit einem Ventilschieber und ein Koppelelement.

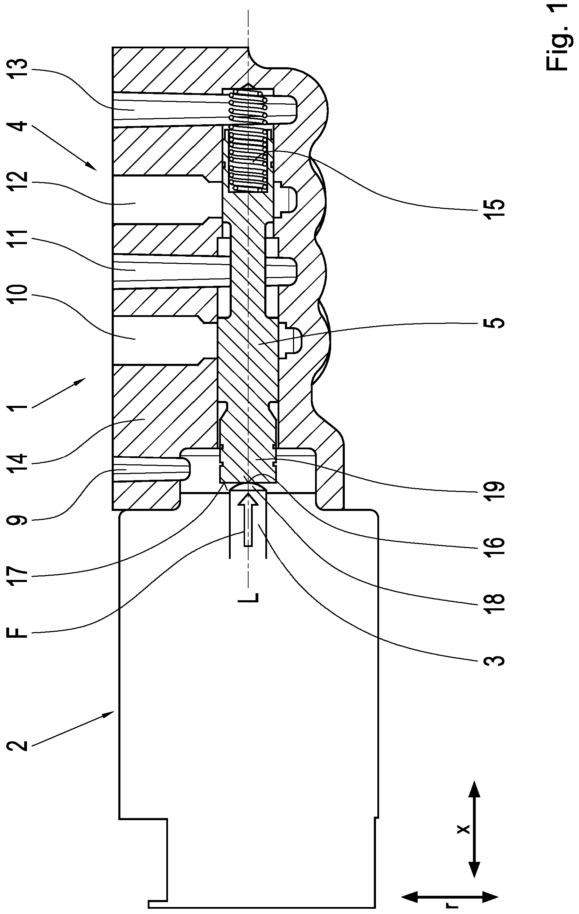

Der Ventilschieber und der Stößel sind in der Ventilanordnung nebeneinander und koaxial angeordnet, d.h. sie weisen dieselbe Längsachse auf. Die Aufgabe des Stößels kann zum einen darin bestehen, den Ventilschieber derart in seiner axialen Richtung zu verschieben, dass der Ventilschieber sich aus einer ersten Schaltstellung in eine zweite Schaltstellung bewegt, um auf diese Weise unterschiedliche Schaltzustände des Hydraulikventils zu ermöglichen. Dies ist der Fall, wenn das Hydraulikventil als Wegeventil ausgebildet ist, welches sich in mindestens zwei Schaltstellungen schalten lässt. Ist das Hydraulikventil als Druckregelventil ausgebildet, bewirkt die über den Stößel auf den Ventilschieber wirkende Kraft die Einstellung des geregelten Druckes. Dessen Höhe ergibt sich aus einer Regelstellung, die der Ventilschieber infolge eines Kräftegleichgewichts an diesem einnimmt. An einem Druckregelventil nach dem Stand der Technik wie in Fig. 1 dargestellt ergibt sich das Kräftegleichgewicht aus der Kraft einer vorgespannten Feder, mindestens einer Druckkraft, welche auf eine Differenzfläche des Ventilschiebers wirkt und der elektromechanischen Kraft, die der Stößel auf den Ventilkolben ausübt. Je nach dem Verhältnis der Kräfte nimmt der Ventilschieber eine Regelstellung ein.

Der Stößel weist dazu eine Erzeuger-Druckfläche auf. Die Erzeuger-Druckfläche erstreckt sich in einer radialen Richtung. Die radiale Richtung bezieht sich dabei insbesondere auf den Stößel des elektromagnetischen Aktuators und/oder auf den Ventilschieber des Hydraulikventils. In analoger Weise bezieht sich, wenn im Folgenden Bezug auf eine axiale Richtung genommen wird, diese axiale Richtung ebenfalls auf den Stößel des elektromagnetischen Aktuators und/oder auf den Ventilschieber des Hydraulikventils. Die Erzeuger-Druckfläche ist in einem axialen Endabschnitt des Stößels angeordnet. Weiterhin steht die Erzeuger Druckfläche einem axialen Endabschnitt des Ventilschiebers gegenüber. Auf diese Weise ist die Erzeuger Druckfläche des Stößels derart in der Nähe des axialen Endabschnitts des Ventilschiebers angeordnet, dass der Stößel den Ventilschieber in der axialen Richtung verschieben kann, in dem die Erzeuger-Druckfläche auf den axialen Endabschnitt des Ventilschiebers in der axialen Richtung drückt. Durch die Verschiebung des Ventilschiebers in der axialen Richtung kann der Ventilschieber besagte unterschiedliche Schaltstellungen oder Regelstellungen innerhalb des Hydraulikventils annehmen.

Der Ventilschieber weist eine Empfänger-Druckfläche auf, welche sich in der radialen Richtung erstreckt. Die Empfänger-Druckfläche bildet die Angriffsfläche für eine Verstellkraft des Stößels. Um Schwingungen im Bereich des Stößels und des Ventilschiebers zu vermeiden oder zumindest zu reduzieren, wird zwischen dem Stößel und dem Ventilschieber ein Koppelelement angeordnet. Das Koppelelement erstreckt sich dabei in der axialen Richtung zwischen der Erzeuger-Druckfläche des Stößels und der Empfänger-Druckfläche des Ventilschiebers. Somit ist das Koppelelement unmittelbar dort angeordnet, wo der Stößel die Verstellkraft auf den Ventilschieber ausübt. Die Verstellkraft wird nicht oder zumindest nicht sofort unmittelbar von dem Stößel auf den Ventilschieber übertragen, sondern stattdessen gedämpft über das Koppelelement, bei dem es sich beispielsweise um eine Feder oder um ein anderes elastisches Element handeln kann, das auch zusätzliche Dämpfungseigenschaften haben kann. Der Stößel wirkt in diesem Sinne in der axialen Richtung auf das Koppelelement ein, sodass das Koppelelement in der axialen Richtung gestaucht wird und sodass der Stößel eine Verstellkraft gedämpft über seine Erzeuger-Druckfläche und das Koppelelement auf die Empfänger-Druckfläche des Ventilschiebers überträgt.

Erfindungsgemäß handelt es sich bei dem Koppelelement um ein Gummielement , welches in eine Ausnehmung des Ventilschiebers eingeschoben ist. In diesem Sinne weist der Ventilschieber in einer weiteren Ausführungsform eine Ausnehmung auf, wobei die Ausnehmung sich ausgehend von dem axialen Endabschnitt des Ventilschiebers in der axialen Richtung in den Ventilschieber hinein erstreckt. Das Koppelelement wird weiterhin durch ein Gummielement gebildet, wobei das Gummielement innerhalb der Ausnehmung angeordnet ist. Ferner übt der Stößel mit seiner Erzeuger-Druckfläche die Verstellkraft auf einen axialen Endabschnitt des Gummielements aus.

Die Ausnehmung und das Gummielement können gestuft ausgeführt sein. Beispielsweise kann die Ausnehmung im Längsschnitt T-förmig ausgestaltet sein, wobei das Gummielement ebenfalls im Längsschnitt dazu passend T-förmig ausgestaltet ist. Die gestufte Ausführung von Ausnehmung und Gummielement ermöglicht eine günstige Verteilung der Verstellkraft auf den Ventilschieber und eine besonders wirksame Schwingungsdämpfung.

Alternativ hierzu kann das Gummielement und damit auch die Ausnehmung zylindrisch ausgebildet sein, was die Herstellung beider vereinfachen würde.

Die Ventilanordnung, insbesondere deren Hydraulikventil, kann ein Direktsteuerventil bilden. Dabei kann das Hydraulikventil dazu eingerichtet sein, einen hydraulischen Systemdruck zu modellieren und ohne weitere Modulation (gegebenenfalls unter Einsatz eines Volumenverstärkers) zur Ansteuerung einer Kupplung in einem Getriebe eines Kraftfahrzeugs bereitzustellen.

Gemäß einem zweiten Aspekt der Erfindung wird ein Getriebe für ein Kraftfahrzeug bereitgestellt. Bei dem Getriebe kann es sich insbesondere um ein Automatikgetriebe handeln. Das Getriebe gemäß dem zweiten Aspekt der Erfindung umfasst wenigstens eine Ventilanordnung gemäß dem ersten Aspekt der Erfindung.

Gemäß einem dritten Aspekt der Erfindung wird ein Kraftfahrzeug bereitgestellt, welches ein Getriebe gemäß dem zweiten Aspekt der Erfindung umfasst. Bei dem Kraftfahrzeug handelt es sich insbesondere um ein Fahrzeug, das von einem Motor angetrieben wird, beispielsweise ein Automobil (z.B. ein Personenkraftfahrwagen mit einem Gewicht von weniger als 3,5 t), Motorrad, Motorroller, Moped, Fahrrad, E-Bike bzw. Pedelec (Akronym für Pedal Electric Cycle), Bus oder Lastkraftwagen (z.B. mit einem Gewicht von über 3,5 t).

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine bekannte Ventilanordnung mit einem elektromagnetischen Aktuator und einem Hydraulikventil, das als Direktsteuerventil ausgeführt ist,
- Fig. 2: ein erstes Ausführungsbeispiel einer erfindungsgemäßen Ventilanordnung mit einem elektromagnetischen Aktuator und einem Hydraulikventil, das als Direktsteuerventil ausgeführt ist, wobei ein Federelement auf einem Stößel des elektromagnetischen Aktuators angeordnet ist,
- Fig. 3: ein zweites Ausführungsbeispiel einer erfindungsgemäßen Ventilanordnung mit einem elektromagnetischen Aktuator und einem Hydraulikventil, das als Direktsteuerventil ausgeführt ist, wobei ein Federelement auf einem Ventilschieber des Hydraulikventils angeordnet ist,
- Fig. 4: ein drittes Ausführungsbeispiel einer erfindungsgemäßen Ventilanordnung mit einem elektromagnetischen Aktuator und einem Hydraulikventil, das als Direktsteuerventil ausgeführt ist, wobei ein Gummielement in einen Ventilschieber des Hydraulikventils eingeschoben ist, und
- Fig. 5: eine Seitenansicht eines Kraftfahrzeugs, welches wenigstens einen Motor und ein Getriebe mit einer Ventilanordnung nach Fig. 2 bis 4 umfasst.

Fig. 1 zeigt eine Ventilanordnung 1, die einen elektromagnetischen Aktuator 2 mit einem Stößel 3 sowie ein Hydraulikventil 4 (Wegeventil) mit einem Ventilschieber 5 umfasst. Der elektromagnetische Aktuator 2 und das Hydraulikventil 4 bilden gemeinsam eine Einheit. In dem gezeigten Ausführungsbeispiel ist das Hydraulikventil 4 als ein Direktsteuerventil ausgebildet.

Ein Stößel 3 des elektromagnetischen Aktuators 2 und ein Ventilschieber 5 des Hydraulikventils 4 sind beide axial hintereinander angeordnet weisen die selbe Längsachse L auf. Der elektromagnetische Aktuator 2 ist dazu eingerichtet, den Stößel 3 entlang der Längsachse L in einer axialen Richtung x hin und her zu bewegen. Dazu kann der elektromagnetische Aktuator 2 in an sich bekannter Weise beispielsweise eine Magnetspule, einen Magnetanker sowie eine Ankerstange umfassen. Die genannten Elemente des elektromagnetischen Aktuators 2 sind jedoch in der Zeichnung nicht näher dargestellt.

Das Hydraulikventil 4 umfasst neben dem Ventilschieber 5 weiterhin mehrere Anschlüsse 9 bis 13, welche der Zufuhr oder Abfuhr von Hydraulikflüssigkeit, insbesondere Öl, dienen. Die Anschlüsse 9 bis 13 sind in einem Ventilgehäuse 14 ausgebildet, innerhalb welchem auch der Ventilschieber 5 aufgenommen ist. Wie der Stößel 3 kann auch der Ventilschieber 5 entlang der Längsachse L in einer axialen Richtung x hin und her bewegt werden, um auf diese Weise unterschiedliche Schaltstellungen einzunehmen, sodass unterschiedliche Schaltzustände des Hydraulikventils 4 bereitgestellt werden.

Der Ventilschieber 5 kann durch unterschiedliche Kräfte in der axialen Richtung x bewegt werden. Zum einen weist das Hydraulikventil 4 eine Feder 15 auf, welche den Ventilschieber 5 in Richtung des Stößels 3 vorspannt. Weiterhin kann Hydraulikflüssigkeit, die über einen der Anschlüsse 9 bis 13 in das Hydraulikventil 4 gelangt, einen Öldruck aufbauen, der auf den Ventilschieber 5 wirkt, sodass sich der Ventilschieber 5 in der axialen Richtung x bewegt.

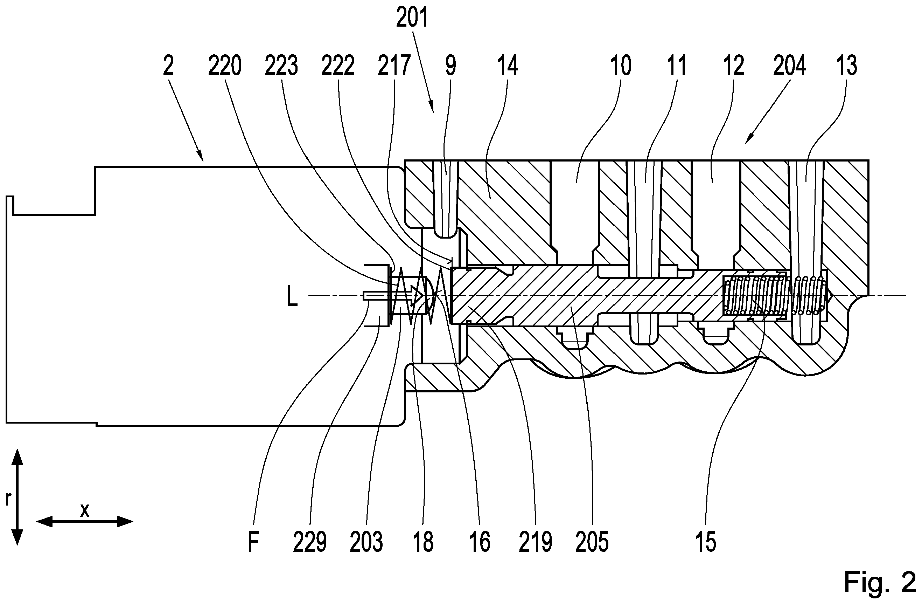

Außerdem kann der Stößel 3 eine Verstellkraft F auf den Ventilschieber 5 ausüben. Die Verstellkraft F ist in der axialen Richtung x orientiert und verläuft insbesondere entgegengesetzt zu der Vorspannkraft der Feder 15. Der Stößel 3 weist eine Erzeuger-Druckfläche 16 auf, über welche der Stößel 3 die Verstellkraft F auf eine Empfänger-Druckfläche 17 des Ventilschiebers 5 übertragen kann. Die Erzeuger-Druckfläche 16 und die Empfänger-Druckfläche 17 erstrecken sich jeweils in einer radialen Richtung r, die senkrecht zu der axialen Richtung x verläuft. Die Erzeuger-Druckfläche 16 ist an einem axialen Endabschnitt 18 des Stößels 3 angeordnet. Auch die Empfänger-Druckfläche 17 ist in dem gezeigten Ausführungsbeispiel an einem axialen Endabschnitt 19 des Ventilschiebers 5 angeordnet. Die Erzeuger-Druckfläche 16 und die Empfänger-Druckfläche 17 verlaufen somit parallel zueinander. Die Erzeuger-Druckfläche 16 steht dabei dem axialen Endabschnitt 19 des Ventilschiebers 5 und auch der Empfänger-Druckfläche 17 gegenüber, wobei ein axialer Spalt zwischen der Erzeuger-Druckfläche 16 und der Empfänger-Druckfläche 17 bestehen kann, wenn beispielsweise der Ventilschieber 5 infolge einer hydraulischen Kraft entgegen der Kraft der Feder 15 vom Stößel 3 weg verschoben wird. Bei der Übertragung der Verstellkraft von dem Stößel 3 auf den Ventilschieber 5 können unerwünschte Schwingungen auftreten. Um diese Schwingungen zu dämpfen, wird erfindungsgemäß wie in Fig. 2 bis 4 dargestellt zwischen der Erzeuger-Druckfläche 16 und der Empfänger-Druckfläche 17 ein Koppelelement 220, 320 oder 420 platziert, welches die vorstehend genannten Schwingungen dämpft.

Fig. 2 bis 4 zeigen in diesem Sinne drei erfindungsgemäße Alternativen, gemäß welchen jeweils ein Koppelelement 220, 320 oder 420 in die Anordnung 1 nach Fig. 1 eingebracht wird. Das jeweilige Koppelelement 220, 320 oder 420 erstreckt sich dabei in der axialen Richtung x zwischen der Erzeuger-Druckfläche 16 des Stößels 3 oder 203 und einer Empfänger-Druckfläche 217, 317 oder 421 und 422 eines Ventilschiebers 205, 305 oder 405. Durch das Koppelelement 220, 320 oder 420 trifft der Stößel 3 oder 203 nicht mehr direkt auf den Ventilschieber 205, 305 oder 405, sondern der Stößel 3 oder 203 wirkt in der axialen Richtung x derart auf das jeweilige Koppelelement 220, 320 oder 420 ein, dass dieses in der axialen Richtung x gestaucht wird und der Stößel 3 oder 203 eine Verstellkraft F gedämpft über seine Erzeuger-Druckfläche 16 und das Koppelelement 220, 320 oder 420 auf die Empfänger-Druckfläche 217, 317 oder 421 und 422 des Ventilschiebers 205, 305 oder 405 überträgt.

In dem Ausführungsbeispiel einer Ventilanordnung 201 nach Fig. 2 wird das Koppelelement durch ein Federelement gebildet. Bei dem Federelement handelt es sich in dem gezeigten Ausführungsbeispiel um eine Spiralfeder 220, die einen Stößel 203 in der radialen Richtung r koaxial umgibt. Die Spiralfeder 220 ist auf dem Stößel 203 angeordnet und stützt sich axial gegen ein Anschlagelement 229 ab, welches an dem Stößel 203 ausgebildet ist. Im gezeigten Ausführungsbeispiel nach Fig. 2 ist das Anschlagelement als eingedrehter Absatz ausgebildet. Hierdurch ist die Spiralfeder 220 in der axialen Richtung x derart gegen ein Verschieben gesichert, dass der Stößel 203 zunächst durch die Spiralfeder 220 abgebremst wird, wenn der Stößel 203 sich mit seiner Erzeuger-Druckfläche 16 in der axialen Richtung x auf die Empfänger-Druckfläche 217 des Ventilschiebers 205 zubewegt. Dabei kann der Stößel 203 bereits zumindest einen Teil der Verstellkraft F über die Spiralfeder 220 auf den Ventilschieber 205 übertragen, ist aber axial vom Ventilschieber 205 beabstandet. Aufgrund dieses Abstandes ist bei gleichen Abmessungen der Ventilanordnung 201 wie jener der Ventilanordnung 1 nach dem Stand der Technik der Ventilschieber 205 kürzer als der Ventilschieber 5 nach dem Stand der Technik. Wenn sich der Stößel 203 so weit in der axialen Richtung x auf den Ventilschieber 205 zubewegt hat, dass der Spalt zwischen der Erzeuger-Druckfläche 16 und der Empfänger-Druckfläche 217 an einem axialen Endabschnitt 219 der Ventilschiebers 205 aufgebraucht ist, wirkt der Stößel 203 direkt auf den Ventilschieber 205.

Alternativ hierzu kann die Spiralfeder 220 auch so ausgelegt sein, dass deren Windungen auf Block gehen, bevor die Erzeuger-Druckfläche 16 an der Empfänger-Druckfläche 217 anliegt. In dem Ausführungsbeispiel nach Fig. 2 wirken einander abgewandte axiale Enden 222 und 223 der Spiralfeder 220 auf den Ventilschieber 205 einerseits und auf den Stößel 203 andererseits. Die Empfänger-Druckfläche wird wie bereits erwähnt gemäß Fig. 2 durch eine axiale Stirnseite 217 des Ventilschiebers 205 gebildet, wobei die axiale Stirnseite 217 den axialen Endabschnitt 219 des Ventilschiebers 205 in Richtung des Stößels 203 abschließt. Ein erstes axiales Ende 222 der Spiralfeder 220 liegt an der Empfänger-Druckfläche 217 an. Ein zweites axiales Ende 223 der Spiralfeder 220 ist an dem Stößel 203 befestigt. Alternativ hierzu kann das axiale Ende 222 auch am Ventilschieber 205 befestigt sein, oder beide axialen Enden sind nicht befestigt, da die Spiralfeder 220 im eingebauten Zustand unter der Wirkung der vorgespannten Feder 15 zwischen dem Anschlagelement des Stößels 203 und dem Ventilschieber 205 vorgespannt ist.

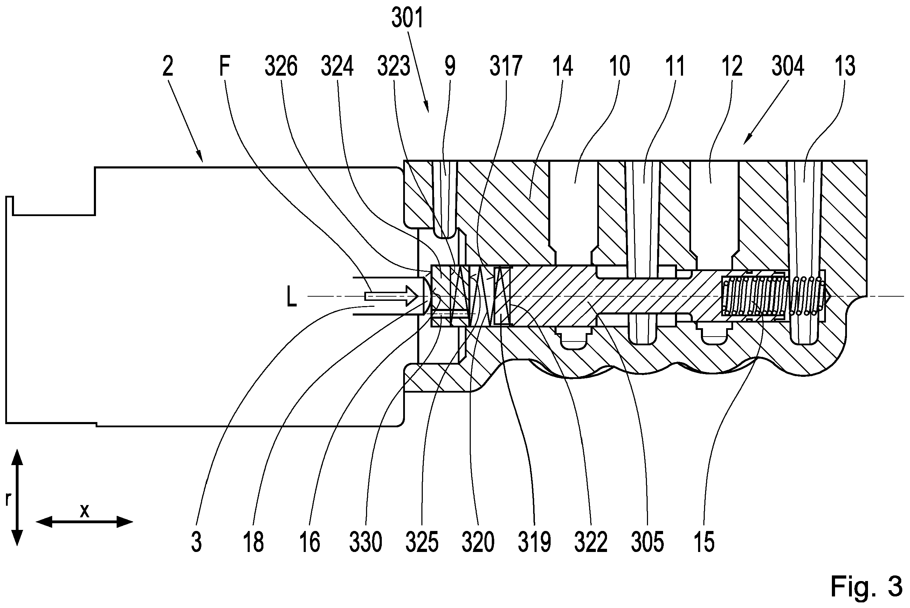

Fig. 3 zeigt in einer Ventilanordnung 301 ein alternatives Beispiel eines Koppelelements in Form einer Spiralfeder 320, die anstatt auf dem Stößel 3 (wie durch Fig. 2 gezeigt) auf einem Ventilschieber 305 angeordnet ist. Das erste axiale Ende 322 der Spiralfeder 320 ist in der axialen Richtung x fest auf dem Ventilschieber 305 angeordnet. Das zweite axiale Ende 323 der Spiralfeder 320 kann über ein Zwischenelement 324 mit der Erzeuger-Druckfläche 16 des Stößels 3 in Wirkverbindung gebracht werden. Das zweite axiale Ende 323 der Spiralfeder 320 liegt dabei an einer ersten Stirnfläche 325 des Zwischenelements 324 an. Ferner kann eine der ersten Stirnfläche 325 abgewandte zweite Stirnfläche 326 des Zwischenelements 324 mit der Erzeuger-Druckfläche 16 des Stößels 3 in Anlage gebracht werden, um die Verstellkraft F des Stößels 3 gedämpft auf den Ventilschieber 305 zu übertragen. Bei dem Zwischenelement 324 handelt es sich in dem gezeigten Ausführungsbeispiel um einen zylindrischen Kolben, der den gleichen Durchmesser aufweist wie der Ventilschieber 305. Alternativ hierzu kann das zweite axiale Ende 323 der Spiralfeder 320 aber auch an der Seite des Zwischenelements 324 befestigt sein, die der ersten Stirnfläche 325 zugewandt ist.

Als weitere Alternative können beide axiale Enden 322 und 323 jeweils an dem Zwischenelement 324 und dem Ventilschieber 305 befestigt sein. Ähnlich wie bei der Ausgestaltung nach Fig. 2 kann auch hier die Spiralfeder 320 so ausgelegt sein, dass deren Windungen auf Block liegen, wenn der Stößel 3 den Ventilschieber 305 entgegen der Kraft der Feder 15 gegen einen Anschlag drückt. Alternativ hierzu kann die Spiralfeder 320 in Verbindung mit der Ausgestaltung des Zwischenelementes 324 und des Ventilschiebers 305 so bemessen sein, dass die erste Stirnfläche 325 des Zwischenstücks 324 an der Empfänger-Druckfläche 317 des Ventilschiebers 305 anliegt, wenn die Kraft des Stößels 3 ausreichend groß ist.

Optional kann das Zwischenelement 324 einen axial gerichteten Entlastungskanal 330 aufweisen, wodurch das zwischen dem Ventilschieber 305 und dem Zwischenelement 324 eingeschlossene Betriebsmedium zu dem Anschluss 9 entweichen kann, falls dieser drucklos ist, so dass sich kein Druck in dem Raum zwischen dem Zwischenelement 324 und dem Ventilschieber 305 aufbauen kann und damit das Regelungsverhalten des Hydraulikventils 304 negativ beeinflussen könnte. Der Entlastungskanal 330 kann hierbei als Durchgangsbohrung ausgebildet sein. Die Lage des Entlastungskanals 330 kann zentrisch oder wie in Fig. 3 dargestellt, exzentrisch sein.

Für die Ausgestaltungen nach Fig. 2 und 3 gilt, dass die Abmessungen und Steifigkeiten (E-Modul) der als Koppelelement dienenden Spiralfedern 220 bzw. 320 und der Feder 15 so gewählt sind, dass die Vorspannkraft der als Koppelelement dienenden Feder 220 bzw. 320 größer ist als die der Feder 15. Insbesondere sind die Federkräfte so auszulegen, dass das Regelungsverhalten des Hydraulikventils 204 oder 304 nicht nachteilig beeinflusst wird.

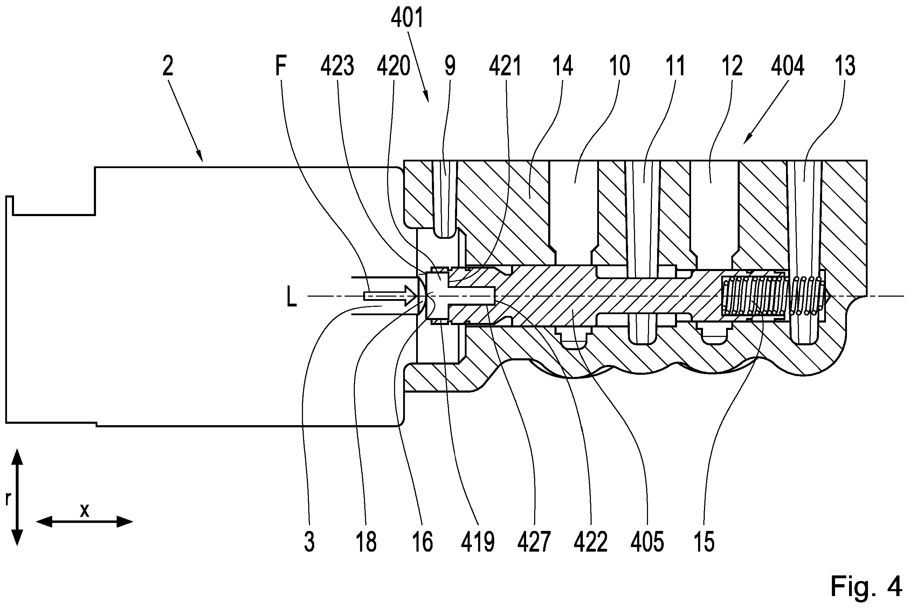

Fig. 4 zeigt anhand einer Ventilanordnung 401, dass es sich bei dem Koppelelement alternativ um ein Gummielement 420 handeln kann, welches in eine Ausnehmung 427 des Ventilschiebers 405 eingeschoben ist. Die Ausnehmung 427 erstreckt sich ausgehend von dem axialen Endabschnitt 419 des Ventilschiebers 405 in der axialen Richtung x in den Ventilschieber 405 hinein. Der Stößel 3 übt über seine Erzeuger-Druckfläche 16 die Verstellkraft F auf einen axialen Endabschnitt 423des Gummielements 421 aus. Die Ausnehmung 427 und das Gummielement 420 sind in dem Ausführungsbeispiel nach Fig. 4 gestuft ausgeführt. Dabei weist die Ausnehmung 427 im Längsschnitt eine T-förmige Gestalt auf, wobei das Gummielement 420 ebenfalls ein dazu passendes T-förmiges Profil im Längsschnitt aufweist, welche beispielsweise durch eine stufenförmige Eindrehung herstellbar ist. Die gestufte Ausführung von Ausnehmung 427 und Gummielement 420 ermöglicht eine besonders wirksame Schwingungsdämpfung. Dabei verteilt sich die von dem Stößel 3 aufgebrachte Verstellkraft F auf eine ringförmige Empfänger-Druckfläche 421 und eine kreisförmige Empfänger-Druckfläche 422 , die in radialer Richtung r und in axialer Richtung x von der der ringförmigen Empfänger-Druckfläche 421 beabstandet ist. Alternativ hierzu kann das Gummielement und damit die Ausnehmung auch einfach zylindrisch ausgeführt sein. Dies hätte den Vorteil einer einfacheren Herstellung, sowohl der Ausnehmung als auch des Gummielementes.

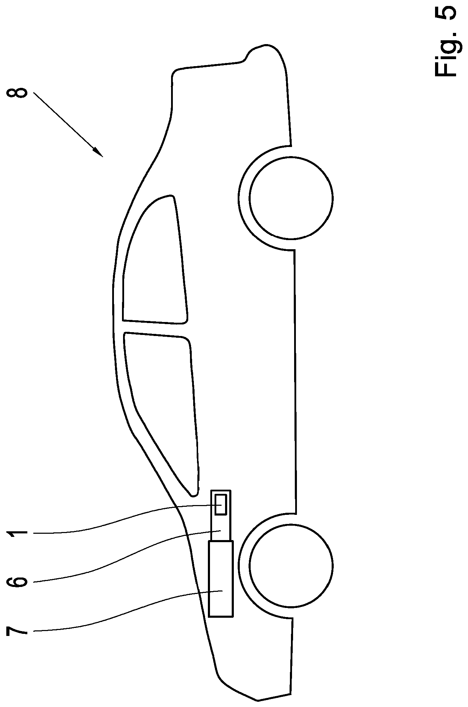

Fig. 5 zeigt schließlich, dass eine Ventilanordnung 201, 301 oder 401 nach Fig. 2 bis 4 in einem Getriebe, insbesondere in einem Automatikgetriebe 6, eingesetzt werden kann. Wenigstens ein Motor 7 (Verbrennungskraftmotor und/oder Elektromotor) kann dabei über das Automatikgetriebe 6 ein Kraftfahrzeug 8 antreiben.

### Bezugszeichen

- F: Verstellkraft
- L: Längsachse Stößel, Ventilschieber
- r: Radiale Richtung
- x: Axiale Richtung

- 1: Ventilanordnung
- 2: elektromagnetischer Aktuator
- 3: Stößel
- 4: Hydraulikventil
- 5: Ventilschieber
- 6: Automatikgetriebe
- 7: Motor
- 8: Kraftfahrzeug
- 9: Anschluss Hydraulikventil
- 10: Anschluss Hydraulikventil
- 11: Anschluss Hydraulikventil
- 12: Anschluss Hydraulikventil
- 13: Anschluss Hydraulikventil
- 14: Ventilgehäuse
- 15: Feder
- 16: Erzeuger-Druckfläche
- 17: Empfänger-Druckfläche
- 18: axialer Endabschnitt Stößel
- 19: axialer Endabschnitt Ventilschieber
- 201: Ventilanordnung
- 203: Stößel
- 204: Hydraulikventil
- 205: Ventilschieber
- 217: Empfänger-Druckfläche
- 219: axialer Endabschnitt Ventilschieber
- 220: Koppelelement (Spiralfeder)
- 222: erstes axiales Ende Spiralfeder
- 223: zweites axiales Ende Spiralfeder
- 229: Anschlagelement
- 301: Ventilanordnung
- 304: Hydraulikventil
- 305: Ventilschieber
- 317: Empfänger-Druckfläche
- 319: axialer Endabschnitt Ventilschieber
- 320: Koppelelement (Spiralfeder)
- 322: erstes axiales Ende Spiralfeder
- 323: zweites axiales Ende Spiralfeder
- 324: Zwischenelement
- 325: erste Stirnfläche Zwischenelement
- 326: zweite Stirnfläche Zwischenelement
- 330: Entlastungsbohrung
- 401: Ventilanordnung
- 404: Hydraulikventil
- 405: Ventilschieber
- 419: axialer Endabschnitt Ventilschieber
- 420: Koppelelement (Gummielement)
- 421: Empfänger-Druckfläche
- 422: Empfänger-Druckfläche
- 423: axialer Endabschnitt Gummielement
- 427: Ausnehmung Ventilschieber

## Patentansprüche

1. Ventilanordnung (201, 301, 401) für ein Getriebe eines Kraftfahrzeugs, die Ventilanordnung (201, 301, 401) umfassend
- einen elektromagnetischen Aktuator (2) mit einem Stößel (3, 203),
- ein Hydraulikventil 204, 304, 404) mit einem Ventilschieber (205, 305, 405) und
- ein Koppelelement (420), wobei
- der Stößel (3, 203) eine Erzeuger-Druckfläche (16) aufweist, welche
- sich in einer radialen Richtung (r) erstreckt,
- in einem axialen Endabschnitt (18) des Stößels (3, 203) angeordnet ist und
- einem axialen Endabschnitt (219, 319, 419) des Ventilschiebers (, 205, 305, 405) gegenübersteht,
- der Ventilschieber (205, 305, 405) eine Empfänger-Druckfläche (217, 317, 421, 422) aufweist, welche sich in der radialen Richtung (r) erstreckt,
- das Koppelelement (420) sich in einer axialen Richtung (x) zwischen der Erzeuger-Druckfläche (16) des Stößels (3, 203) und der Empfänger-Druckfläche (217, 317, 421, 422) des Ventilschiebers (205, 305, 405) erstreckt, und
- der Stößel (3, 203) in der axialen Richtung (x) auf das Koppelelement (420) einwirkt, sodass
- das Koppelelement (420) in der axialen Richtung (x) gestaucht wird und
- der Stößel (3, 203) eine Verstellkraft (F) gedämpft über seine Erzeuger-Druckfläche (16) und das Koppelelement (420) auf die Empfänger-Druckfläche (217, 317, 421, 422) des Ventilschiebers (205, 305, 405) überträgt, wobei
- der Ventilschieber (405) eine Ausnehmung (427) aufweist, und
- die Ausnehmung (427) sich ausgehend von dem axialen Endabschnitt (419) des Ventilschiebers (405) in der axialen Richtung (x) in den Ventilschieber (405) hinein erstreckt, **dadurch gekennzeichnet, dass**
- das Koppelelement durch ein Gummielement (420) gebildet wird,
- das Gummielement (420) innerhalb der Ausnehmung (427) angeordnet ist, und
- der Stößel (3) mit seiner Erzeuger-Druckfläche (16) die Verstellkraft (F) auf einen axialen Endabschnitt (423) des Gummielements (420) ausübt.

2. Ventilanordnung (1, 401) nach Anspruch 1, **dadurch gekennzeichnet, dass** die Ausnehmung (427) und das Gummielement (420) gestuft ausgeführt sind.

3. Ventilanordnung (201, 301, 401) nach einem der vorstehenden Ansprüche, wobei die Ventilanordnung ein Direktsteuerventil (1) bildet.

4. Getriebe (6) für ein Kraftfahrzeug (8), das Getriebe (6) umfassend eine Ventilanordnung (201, 301, 401) nach einem der vorstehenden Ansprüche.

5. Kraftfahrzeug (8) umfassend ein Getriebe (6) nach Anspruch 4.

## Claims

1. Valve arrangement (201, 301, 401) for a transmission of a motor vehicle, the valve arrangement (201, 301, 401) comprising
- an electromagnetic actuator (2) with a ram (3, 203),
- a hydraulic valve (204, 304, 404) with a valve slide (205, 305, 405), and
- a coupling element (420), wherein
- the ram (3, 203) has a generator pressure surface (16) which
- extends in a radial direction (r),
- which is arranged in an axial end portion (18) of the ram (3, 203) and
- which faces an axial end portion (219, 319, 419) of the valve slide (205, 305, 405),
- the valve slide (205, 305, 405) has a receiver pressure surface (217, 317, 421, 422) which extends in the radial direction (r),
- the coupling element (420) extends in an axial direction (x) between the generator pressure surface (16) of the ram (3, 203) and the receiver pressure surface (217, 317, 421, 422) of the valve slide (205, 305, 405), and
- the ram (3, 203) acts on the coupling element (420) in the axial direction (x) so that
- the coupling element (420) is compressed in the axial direction (x) and
- the ram (3, 203) transmits an adjustment force (F) to the receiver pressure surface (217, 317, 421, 422) of the valve slide (205, 305, 405) in a damped manner via its generator pressure surface (16) and the coupling element (420), wherein
- the valve slide (405) has a recess (427), and
- the recess (427) extends into the valve slide (405) in the axial direction (x) proceeding from the axial end portion (419) of the valve slide (405), **characterized in that**
- the coupling element is formed by a rubber element (420),
- the rubber element (420) is arranged within the recess (427), and
- the ram (3) exerts the adjustment force (F) on an axial end portion (423) of the rubber element (420) by way of its generator pressure surface (16).

2. Valve arrangement (1, 401) according to Claim 1, **characterized in that** the recess (427) and the rubber element (420) are of stepped form.

3. Valve arrangement (201, 301, 401) according to either of the preceding claims, wherein the valve arrangement forms a direct control valve (1).

4. Transmission (6) for a motor vehicle (8), the transmission (6) comprising a valve arrangement (201, 301, 401) according to one of the preceding claims.

5. Motor vehicle (8) comprising a transmission (6) according to Claim 4.

## Revendications

1. Ensemble soupape (201, 301, 401) pour une transmission d'un véhicule à moteur, l'ensemble soupape (201, 301, 401) comprenant
- un actionneur électromagnétique (2) comportant un poussoir (3, 203),
- une soupape hydraulique 204, 304, 404) comportant un tiroir de soupape (205, 305, 405) et
- un élément d'accouplement (420), dans lequel
- le poussoir (3, 203) présente une surface de pression génératrice(16) qui
- s'étend dans une direction radiale (r),
- est disposée dans une partie d'extrémité axiale (18) du poussoir (3, 203), et
- fait face à une partie d'extrémité axiale (219, 319, 419) du tiroir de soupape (205, 305, 405),
- le tiroir de soupape (205, 305, 405) présente une surface de pression réceptrice (217, 317, 421, 422) qui s'étend dans la direction radiale (r),
- l'élément d'accouplement (420) s'étend dans une direction axiale (x) entre la surface de pression génératrice (16) du poussoir (3, 203) et la surface de pression réceptrice (217, 317, 305, 405) du tiroir de soupape (205, 421, 422), et
- le poussoir (3, 203) agit dans la direction axiale (x) sur l'élément d'accouplement (420), de sorte que
- l'élément d'accouplement (420) est comprimé dans la direction axiale (x), et
- le poussoir (3, 203) transmet une force de réglage (F) d'une manière amortie, par l'intermédiaire de sa surface de pression génératrice (16) et de l'élément d'accouplement (420), à la surface de pression réceptrice (217, 317, 421, 405) du tiroir de soupape (205, 305, 422), dans lequel
- le tiroir de soupape (405) présente un évidement (427), et
- l'évidement (427) s'étend dans le tiroir de soupape (405) dans la direction axiale (x) à partir de la partie d'extrémité axiale (419) du tiroir de soupape (405), **caractérisé en ce que**
- l'élément d'accouplement est constitué d'un élément en caoutchouc (420),
- l'élément en caoutchouc (420) est disposé à l'intérieur de l'évidement (427), et
- le poussoir (3) exerce, au moyen de sa surface de pression génératrice (16), la force de réglage (F) sur une partie d'extrémité axiale (423) de l'élément en caoutchouc (420).

2. Ensemble soupape (1, 401) selon la revendication 1, **caractérisé en ce que** l'évidement (427) et l'élément en caoutchouc (420) sont réalisés de manière étagée.

3. Ensemble soupape (201, 301, 401) selon l'une quelconque des revendications précédentes, l'ensemble soupape formant une soupape à commande directe (1).

4. Transmission (6) pour un véhicule à moteur (8), la transmission (6) comprenant un ensemble soupape (201, 301, 401) selon l'une quelconque des revendications précédentes.

5. Véhicule automobile (8) comprenant une transmission (6) selon la revendication 4.
